# EUROPEAN PATENT SPECIFICATION

(11) **EP 0 418 957 B1**
(45) Date of publication and mention of the grant of the patent: **03.01.1996**
(21) Application number: 90202426.4
(22) Date of filing: 12.09.1990
(51) Int. Cl.: F16K 1/38, F16K 1/34

(54) **Valve unit for metering a liquid pigment**
Ventileinheit zum Dosieren von flüssigen Farbstoffen
Unité de vannes pour le dosage d'un pigment liquide

(30) Priority: 19.09.1989 NL 8902340
(43) Date of publication of application: 27.03.1991
(73) Proprietor: STORK X-CEL B.V., NL-5831 AN Boxmeer (NL)
(72) Inventor: Geven, Josephus Cornelius Bernardinus, NL-5827 BE Vortum-Mullem (NL)
(74) Representative: van der Arend, Adrianus G.A., Ir.

(56) References cited:
- DE-A- 1 550 555
- FR-A- 664 686
- FR-A- 1 246 843
- US-A- 1 689 974
- US-A- 1 801 959
- US-A- 2 640 630
- US-A- 3 625 241

## Description

The invention relates to a valve unit for metering a liquid, comprising a chamber into which a liquid supply pipe opens and which has a passage formed in a bottom of said chamber, said passage having substantially a truncated inverted cone shape with a cross-section which gradually increases from the bottom side of said passage towards said chamber, and a shut-off element which is fitted at a bottom end of a lifting rod of a lifting mechanism, the shut-off element being vertically displaceable by the lifting mechanism between a closed position in the passage in which it shuts off the passage and an open position in which it opens the passage for allowing the liquid to pass out of the chamber, while the surface area of an annular throughflow opening between the wall of the passage and the bottom end of the shut-off element gradually increases during the lifting of the shut-off element from the closed position to the open position.

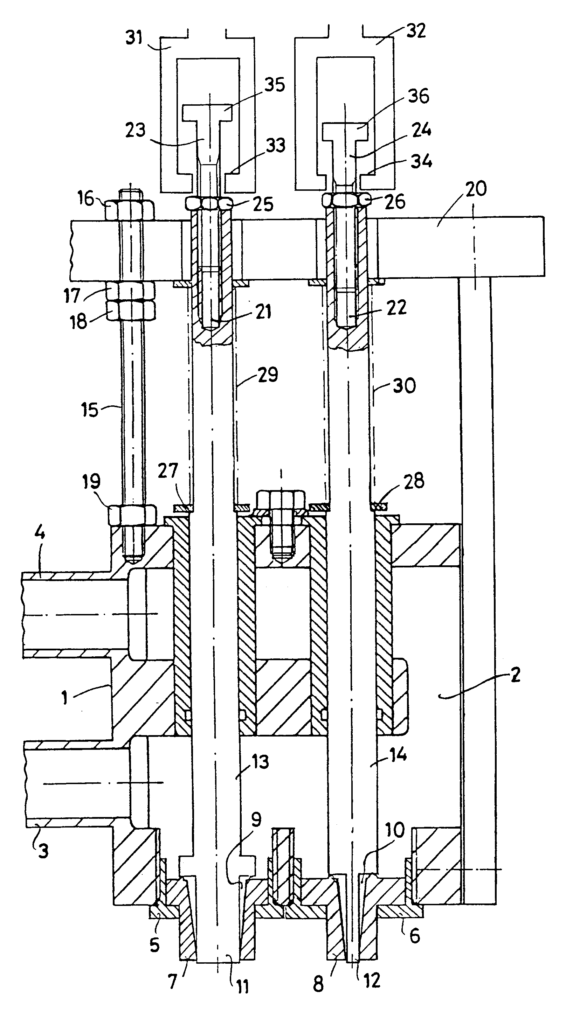

A valve unit of this type is disclosed by patent document FR-A-1.246.843 (figure 1). With the prior art valve unit both the wall of the passage and the wall of the shut-off element diverge conically to above with identical cone angles. The conical shut-off element is truncated at the bottom. The diameter of the shut-off element at the truncated bottom side is smaller than a bottom boundary edge of the passage. As a consequence, to shut off the passage the shut-off element must be urged against the full surface area of the opposite wall of the passage, so that the liquid is squeezed out off the space between said two walls. As a result of this the surfaces of said opposite walls may wear progressively, which ultimately leads to insufficient sealing in the closed position and poor metering characteristics. In addition, closing the valve unit with a sufficient sealing is dependent on the force by which the shut-off element is urged against the opposite wall of the passage, the viscosity of the liquid and the wear which has taken place already. Therefore the lifting mechanism requires powerful means to displace the shut-off element downwardly. On the other hand said strong force may clamp the shut-off element inside the passage, which requires a powerful lifting mechanism to move the shut-off element up yet.

Since the cone angles of both said opposite walls are the same, in an open position of the valve unit there is only small room between the opposite walls to pass the liquid from the chamber downwardly to the outside. In this regard, metering of the liquid accurately will be more difficult as the cone angles are smaller and/or the viscosity of the liquid is greater.

Since currently often quick-drying liquid pigments are used, in the open position, the liquid may dry to some extent at the wall of the passage below the truncated bottom end of the shut-off element. Then the dried-out pigment could clog the room between said opposite walls, which may lead to even more insufficient sealing in the intended closed position of the valve unit.

The abovementioned disadvantages are more significant the more dominant the pigment is in a mixture of different pigments to be received in a container under such valve unit, in particular if said dominant pigment is black.

The object of the invention is to eliminate the disadvantages of the prior art valve unit.

This object is achieved for a valve unit as described in the preamble according to the invention in that the shut-off element is substantially cylindrical such that in the closed position a space is left between the wall of the passage and the shut-off element while the bottom end of the shut-off element projects in a sealing manner passed a bottom boundary edge of the passage. By this, at the beginning of lifting the shut-off element from the closed position the annular flow through area is relatively small and a certain vertical displacement has relatively little influence on the flow through area than at a higher position of the shut-off element, so that an accurate metering of the pigment liquid is possible. In the closed position only small lower parts of the opposite walls support against each other, which assures a very good sealing under most circumstances, where unusual particles, pigment or not, left between said opposite walls above said lower parts will have minor to no influence on the sealing.

The valve unit is preferably such that the lifting rod is displaceable in a sealing manner through the top side of the chamber, and an upper part of the lifting rod has a stop element which interacts in such a way with another vertically displaceable stop element of the lifting mechanism that when the other stop element is lifted sufficiently the stop element of the lifting rod is moved upwards by the other stop element along with it, and the height of one of the stop elements is adjustable. Therefore the lifting mechanism can be used in the same way for different valve units for different pigments, but the control range is adjustable, so that a valve unit for a more dominant pigment, such as black, can be set in such a way that a maximum annular flow through area thereof is smaller than such an area for less dominant pigments.

A preferred embodiment of the valve unit is such that the bottom of the chamber has two or more such passages with different flow through areas at same heights and which can be shut off by corresponding shut-off elements of the same kind which are vertically displaceable by means of lifting rods of the same kind. By suitable adjustment of the stop elements of the lifting rods it is possible then that when the larger passage is shut off the smaller passage is opened and the effective cross-section thereof can be set by lifting the corresponding lifting rod for fine adjustment of the desired quantity of pigment allowed through.

A preferred embodiment is such that the passage is provided in a chamber bottom part made of a flexible material, and that in the open position the diameter of the bottom edge of the passage is smaller than the diameter of the shut-off element. This means that in the closed position the material of the chamber bottom part at the bottom edge of the passage is formed so flexibly that it presses against the shut-off element, as a result of which a good seal is ensured.

The invention is explained with reference to the appended drawing, which shows a cross-section of an embodiment of the valve unit according to the invention.

The valve unit shown comprises a housing 1 with a chamber 2 into which a pipe 3 for supplying a pigment opens, and which has an outflow aperture opening into a pipe 4 for discharging the pigment. The pigment is circulated by means not shown from a container not shown through the supply pipe 3, the chamber 2 and the discharge pipe 4, in order to keep the pigment homogeneous.

Two closing pieces 5, 6 with nozzles 7, 8, having a passage or outlet aperture 9, 10, are screwed into the bottom of the chamber 2.

Bottom ends 11, 12 of lifting rods 13, 14, each displaceable vertically in a sealing manner relative to the chamber 2, project into the passages 9, 10. The housing 4 is connected to a supporting part 20 of a frame (not shown in further detail) by means of fixing devices, such as a stud bolt 15 with nuts 16 to 19. The lifting rods 13, 14 are conveyed through a passage formed by supporting part 20 and have in a top end threaded holes 21, 22, into which a bolt 23, 24 is screwed and secured by means of a nut 25, 26.

A compression spring 29, 30 is fitted concentrically around the lifting rods 13, 14 between a shoulder 27, 28 of the lifting rods 13, 14 and the supporting part 20, by means of which spring the lifting rods 13, 14 are pressed downwards, so that in the bottom position thereof the ends 11, 12 shut off the passages 9, 10. The ends 11, 12 of the lifting rods 13, 14 therefore form shut-off elements for the passages 9, 10.

A lifting mechanism (not shown) comprises lifting elements 31, 32 with stop elements 33, 34 which support the heads or stop elements 35, 36 at the top side of the lifting rod 13, 14 when the lifting elements 31, 32 are lifted and on further lifting move up with them and thereby displace the ends 11, 12 up out of the passages 9, 10.

The cross-section of the passages 9, 10 is such at the bottom side that in the situation shown the ends 11, 12 shut off the passages 9, 10 completely. The cross-section increases gradually from the bottom side of the passages 9, 10 upwards. As a lifting rod 13, 14 is moved further upwards, the effective passage for allowing through the pigment will thereby gradually increase, so that the delivery also increases. Since the passages 9, 10 have a cross-section which gradually increases upwards, this means that during the weighing of the quantity of pigment allowed through the passage aperture, and thus the delivery, can be set in an infinitely variable manner depending on the weight reached, in order to achieve accurately and quickly the desired quantity of pigment allowed through.

The valve unit can according to the invention be designed with a single passage, such as 9, in the bottom of the chamber 2, or with several passages, such as the larger passage 9 and the smaller passage 10, in order to obtain a very fine control. The stops 35, 36 at the top sides of the lifting rods 13, 14 can in this case be adjusted in such a way that when the lifting elements 31, 32 are displaced simultaneously fine adjustment of pigment through the passage 10 is still possible while the passage 9 is completely closed.

An even finer metering of pigment can be obtained by moving the lifting rod 14 up and down rapidly by means of the lifting element 32, in particular from the end 12 inside the passage 10.

The nozzles 7, 8 are preferably made of flexible material and the diameter of the bottom edge of the passage 9, 10 in a position in which the corresponding end 11, 12 does not touch the nozzle 7, 8 is smaller than the diameter of the end 11, 12. When a lifting rod 13, 14 is lowered to the illustrated closed position of the unit, where the end 11, 12 projects past the bottom edge of the nozzle 7, 8, the material of the nozzle 7, 8 at the bottom edge thereof will deform flexibly against the end 11, 12 and thereby ensure a good seal. The material of the nozzles is, for example, polyoxymethylene, and the diameter of the bottom edge of a passage of a nozzle 7, 8 is then, for example, several per cent less than the end 11, 12 of the lifting rod 13, 14.

## Claims

1. Valve unit for metering a liquid, comprising a chamber (2) into which a liquid supply pipe (3) opens and which has a passage (9, 10) formed in a bottom (5, 6) of said chamber, said passage having substantially a truncated inverted cone shape with a cross-section which gradually increases from the bottom side of said passage towards said chamber, and a shut-off element (11, 12) which is fitted at a bottom end of a lifting rod (13, 14) of a lifting mechanism (13-36), the shut-off element (11, 12) being vertically displaceable by the lifting mechanism (13-36) between a closed position in the passage (9, 10) in which it shuts off the passage (9, 10) and an open position in which it opens the passage (9, 10) for allowing the liquid to pass out of the chamber (2), while the surface area of an annular throughflow opening between the wall of the passage (9, 10) and the bottom end of the shut-off element (11, 12) gradually increases during the lifting of the shut-off element from the closed position to the open position, **characterized in that** the shape of the shut-off element (11, 12) is substantially cylindrical such that in the closed position a space is left between the wall of the passage and the shut-off element while the bottom end of the shut-off element projects in a sealing manner passed a bottom boundary edge of the passage (9, 10).

2. Valve unit according to claim 1, **characterized in that** the lifting rod (13, 14) is displaceable in a sealing manner through the top side of the chamber (2), and an upper part of the lifting rod has a stop element (35, 36) which interacts in such a way with another vertically displaceable stop element (33, 34) of the lifting mechanism that when the other stop element (33, 34) is lifted sufficiently the stop element (35, 36) of the lifting rod (13, 14) is moved upwards by the other stop element (33, 34) along with it, and in that the height of one (35, 36) of the stop elements (33-36) is adjustable.

3. Valve unit according to one of the preceding claims, **characterized in that** the bottom of the chamber (2) has two or more such passages (9, 10) with different flow through areas at same heights and which can be shut off by corresponding shut-off elements (9, 10) of the same kind which are vertically displaceable by means of lifting rods (13, 14) of the same kind.

4. Valve unit according to one of the preceding claims, **characterized in that** the passage (9, 10) is provided in a chamber (2) bottom part made of flexible material and that in the open position the diameter of the bottom boundary edge of the passage (9, 10) is smaller than the diameter of the shut-off element (11, 12).

## Patentansprüche

1. Ventileinheit zum Dosieren einer Flüssigkeit, welche aufweist: eine Kammer (2), in welche ein Flüssigkeitszuführrohr (3) mündet und welche einen Durchgang (9, 10) besitzt, der in einem Boden (5, 6) der Kammer ausgebildet ist, wobei der Durchgang im wesentlichen die Form eines umgedrehten Kegelstumpfes besitzt, dessen Querschnitt allmählich von der Unterseite des Durchgangs zur Kammer hin zunimmt, und ein Absperrelement (11, 12), welches an einer Unterseite von einer Hebestange (13, 14) eines Hebemechanismus (13 - 36) befestigt ist, wobei das Absperrelement (11, 12) durch den Hebemechanismus (13 - 36) in senkrechter Richtung zwischen einer geschlossenen Position im Durchgang (9, 10), in welcher es den Durchgang (9, 10) absperrt, und einer offenen Position, in welcher es den Durchgang (9, 10) öffnet, verschiebbar ist, um ein Herausfließen der Flüssigkeit aus der Kammer (2) zu ermöglichen, während die Fläche einer ringförmigen Durchflußöffnung zwischen der Wand des Durchgangs (9, 10) und dem unteren Ende des Absperrelements (11, 12) im Verlauf des Anhebens des Absperrelements von der geschlossenen Position zur offenen Position allmählich zunimmt, **dadurch gekennzeichnet, daß** die Form des Absperrelements (11, 12) im wesentlichen zylindrisch ist, derart daß in der geschlossenen Position ein Raum zwischen der Wand des Durchgangs und des Absperrelements verbleibt, während das untere Ende des Absperrelements sich in einer abdichtenden Weise über die untere Grenzkante des Durchgangs (9, 10) hinaus erstreckt.

2. Ventileinheit nach Anspruch 1, dadurch gekennzeichnet, daß die Hebestange (13, 14) in abdichtender Weise durch die Oberseite der Kammer (2) verschiebbar ist, und ein oberer Teil der Hebestange ein Anschlagelement (35, 36) besitzt, welches in solcher Weise mit einem weiteren in senkrechter Richtung verschiebbaren Anschlagelement (33, 34) des Hebemechanismus zusammenarbeitet, daß, wenn dieses weitere Anschlagelement (33, 34) ausreichend angehoben ist, das Anschlagelement (35, 36) der Hebestange (13, 14) durch das weitere Anschlagelement (33, 34) und gemeinsam mit diesem nach oben bewegt wird, sowie dadurch, daß die Höhe von einem (35, 36) der Anschlagelemente (33 - 36) einstellbar ist.

3. Ventileinheit nach einem der vorstehenden Ansprüche, dadurch gekennzeichnet, daß der Boden der Kammer (2) zwei oder mehr derartige, Durchgänge (9, 10) mit unterschiedlichen Durchflußflächen auf gleicher Höhe besitzt, welche durch entsprechende gleichartige Absperrelemente (9, 10) abgesperrt werden können, die mittels gleichartigen Hebestangen (13, 14) in senkrechter Richtung verschiebbar sind.

4. Ventileinheit nach einem der vorstehenden Ansprüche, dadurch gekennzeichnet, daß der Durchgang (9, 10) in einem aus flexiblem Material hergestellten Bodenteil der Kammer (2) vorgesehen ist und daß in der offenen Position der Durchmesser der unteren Grenzkante des Durchgangs (9, 10) kleiner ist als der Durchmesser des Absperrelements (11, 12).

## Revendications

1. Structure de vanne pour doser un liquide, comprenant une chambre ( 2) dans laquelle débouche un conduit d'alimentation en liquide (3), et qui comporte un passage (9, 10) formé dans un fond (5, 6) de cette chambre, ce passage ayant sensiblement une forme de cône tronqué renversé, avec une section droite qui augmente progressivement à partir du côté inférieur du passage en direction de la chambre, et un élément d'obturation (11, 12) qui est ajusté à une extrémité inférieure d'une tige de soulèvement (13, 14) d'un mécanisme de soulèvement (13-36), l'élément d'obturation (11, 12) pouvant être déplacé verticalement par le mécanisme de soulèvement (13-36) entre une position fermée dans le passage (9, 10), dans laquelle il obture le passage (9, 10) et une position ouverte dans laquelle il ouvre le passage (9, 10), pour permettre au liquide de sortir de la chambre (2), tandis que l'aire de surface d'une ouverture d'écoulement annulaire entre la paroi du passage (9, 10) et l'extrémité inférieure de l'élément d'obturation (11, 12) augmente progressivement pendant le soulèvement de l'élément d'obturation, depuis la position fermée vers la position ouverte, caractérisée en ce que la forme de l'élément d'obturation (11, 12) est sensiblement cylindrique, de façon que dans la position fermée, une région reste entre la paroi du passage et l'élément d'obturation, tandis que l'extrémité inférieure de l'élément d'obturation fait saillie d'une manière étanche au-delà d'un bord constituant la limite inférieure du passage (9, 10).

2. Structure de vanne selon la revendication 1, caractérisée en ce que la tige de soulèvement (13, 14) peut être déplacée d'une manière étanche dans le côté supérieur de la chambre (2), et une partie supérieure de la tige de soulèvement comporte un élément de butée (35, 36) qui coopère avec un autre élément de butée (33, 34) du mécanisme de soulèvement, pouvant être déplacé verticalement, d'une manière telle que lorsque cet autre élément de butée (33, 34) est suffisamment soulevé, l'élément de butée (35, 36) de la tige de soulèvement (13, 14) soit déplacé vers le haut par l'autre élément de butée (33, 34), en compagnie de celui-ci, et en ce que la hauteur de l'un (35, 36) des éléments de butée (33-36) est réglable.

3. Structure de vanne selon l'une quelconque des revendications précédentes, caractérisée en ce que le fond de la chambre (2) comporte deux des passages précités (9, 10), ou plus, avec des aires d'écoulement différentes aux mêmes hauteurs, et qui peuvent être obturés par des éléments d'obturation (11, 12) correspondants, du même genre, qui peuvent être déplacés verticalement au moyen de tiges de soulèvement (13, 14) du même genre.

4. Structure de vanne selon l'une quelconque des revendications précédentes, caractérisée en ce que le passage (9, 10) est formé dans une partie de fond de la chambre (2) qui est en une matière souple, et en ce que dans la position ouverte, le diamètre du bord constituant la limite inférieure du passage (9, 10) est inférieur au diamètre de l'élément d'obturation (11, 12).
